# EUROPÄISCHE PATENTANMELDUNG

(11) **EP 3 382 655 A1**
(43) Veröffentlichungstag der Anmeldung: **03.10.2018**
(21) Anmeldenummer: 18159102.5
(22) Anmeldetag: 28.02.2018
(51) Int. Cl.: G07C 3/00, G06Q 10/08

(54) **VERFAHREN ZU EINER GENERIERUNG ZUMINDEST EINER KENNUNG WENIGSTENS EINES GEGENSTANDS**

(30) Priorität: 29.03.2017 DE 102017205314
(71) Anmelder: Robert Bosch GmbH, 70442 Stuttgart (DE)
(72) Erfinder: Schadow, Joachim, 70563 Stuttgart (DE); Briesenick, Michael, 70563 Stuttgart (DE); Hofmann, Maja, 72827 Wannweil (DE); Esenwein, Florian, 70771 Leinfelden-Echterdingen (DE); Vesenmaier, Daniel, 70771 Leinfelden-Echterdingen (DE); Kutz, Simon, 50321 Bruehl (DE); Staebler, Christian, 70771 Leinfelden-Echterdingen (DE); Barker, Christopher Michael, 70597 Stuttgart (DE)

(57) **Zusammenfassung**

Die Erfindung geht aus von einem Verfahren zu einer Generierung zumindest einer Kennung wenigstens eines Gegenstands (10), insbesondere einer Werkzeugmaschine, wobei in zumindest einem Verfahrensschritt mittels zumindest einer Erfassungseinheit (12) zumindest ein Nutzungsparameter und/oder zumindest ein Gegenstandsparameter des Gegenstands (10) erfasst wird.

Es wird vorgeschlagen, dass in zumindest einem Verfahrensschritt mittels zumindest einer Recheneinheit (14) in Abhängigkeit von dem zumindest einen erfassten Nutzungsparameter und/oder dem zumindest einen erfassten Gegenstandsparameter ein Zertifikat des Gegenstands (10) erstellt wird und/oder der Gegenstand zumindest einer Person (16) zugeordnet wird.

## Beschreibung

### Stand der Technik

Es ist bereits ein Verfahren zur Generierung zumindest einer Kennung wenigstens eines Gegenstands vorgeschlagen worden, wobei in zumindest einem Verfahrensschritt mittels zumindest einer Erfassungseinheit zumindest ein Nutzungsparameter und/oder zumindest ein Gegenstandsparameter des Gegenstands erfasst wird.

### Offenbarung der Erfindung

Die Erfindung geht aus von einem Verfahren zu einer Generierung zumindest einer Kennung wenigstens eines Gegenstands, insbesondere einer Werkzeugmaschine, wobei in zumindest einem Verfahrensschritt mittels zumindest einer Erfassungseinheit zumindest ein Nutzungsparameter und/oder zumindest ein Gegenstandsparameter des Gegenstands erfasst wird,

Es wird vorgeschlagen, dass in zumindest einem Verfahrensschritt mittels zumindest einer Recheneinheit in Abhängigkeit von dem zumindest einen erfassten Nutzungsparameter und/oder dem zumindest einen erfassten Gegenstandsparameter ein Zertifikat des Gegenstands erstellt wird und/oder der Gegenstand zumindest einer Person zugeordnet wird.

Durch die erfindungsgemäße Ausgestaltung des Verfahrens kann eine Effizienz einer Verwaltung des Gegenstands verbessert werden. Weiter vorteilhaft kann ein Benutzerkomfort verbessert werden, indem eine Registrierung vereinfacht und/oder eine Gewährleistung des Gegenstands auch bei Verlust eines Kaufbelegs ermöglicht werden kann. Insbesondere kann mittels des Zertifikats eine Gewährleistung an einen Zustand, insbesondere einen Abnutzungszustand, insbesondere einer Laufzeit, des Gegenstands angepasst werden. Ferner kann abhängig von einer Abnutzung des Gegenstands einem Benutzer eine Option zu einer Verlängerung einer Gewährleistung für den Gegenstand ermöglicht werden. Besonders vorteilhaft kann eine bei einer Produktion, einem Vertrieb und/oder einer Lagerung des Gegenstands der Gewährleistung auftretende Verzögerungen berücksichtigt werden, welche bei einer Lagerung des Gegenstands, beispielsweise in einem Verkaufslager und/oder bei einem Transport, wie sie beispielsweise bei einer Verschiffung von einem Produktionsort zu einem Verkaufsort und/oder bei einer Zustellung des Gegenstands, auftreten kann. Weiter vorteilhaft kann eine Produktsicherheit verbessert werden, da mittels des Zertifikats eine Echtheit des Gegenstands zertifiziert werden kann, wodurch vorteilhaft eine Unterscheidung von Fälschungen verbessert werden kann. Besonders bevorzugt kann durch die Zuordnung bei einer Wartung und/oder Reparatur eine Tätigkeit der Person, sowie weitere der Person zugeordnete Gegenstände berücksichtigt werden, so dass insbesondere eine gleichzeitige Wartung der Gegenstände vermieden werden kann. Weiter vorteilhaft kann der zumindest eine Gegenstandsparameter und/oder der zumindest eine Nutzungsparameter mittels des Zertifikats speziell hinterlegt, aufbereitet und/oder zusammengefasst werden. Insbesondere kann auf einfache Art und Weise ein für eine Serviceleistung, wie beispielsweise eine Instandhaltung, spezifischer Datensatz anhand des Zertifikats ausgelesen werden. Ferner kann vorteilhaft eine Übertragung von Parametern verschiedenen Parametertyps vereinfacht werden.

Unter einer "Kennung" soll insbesondere eine für einen Gegenstand charakteristische Verknüpfung verstanden werden, welche insbesondere zu einer Verarbeitung in einer Recheneinheit vorgesehen ist. Insbesondere ist die Kennung zu einer Verknüpfung des Gegenstands mit dem Zertifikat und/oder der Person vorgesehen. Die Kennung kann insbesondere eine digitale Kennung sein, wie beispielsweise ein Kennungscode, welcher insbesondere zu einer Registrierung des Gegenstands in einem Gegenstandsbestand vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Gegenstand" soll insbesondere ein Objekt verstanden werden, welches zumindest zu einer Ausführung zumindest einer Funktion vorgesehen ist und welches, insbesondere zur Ausführung der Funktion, vorzugsweise von einer Person wenigstens führbar und/oder tragbar ist. Der Gegenstand ist insbesondere ein Werkzeug, vorzugsweise ein Handwerkzeug. Besonders bevorzugt ist der Gegenstand eine insbesondere elektrisch betriebene und vorzugsweise tragbare Werkzeugmaschine, vorzugsweise Handwerkzeugmaschine. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Unter einer "Handwerkzeugmaschine" soll insbesondere eine werkstück-bearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Beispielsweise kann es sich bei dem Gegenstand auch um einen Bohrer, einen Meißel, einen Schlagbohrer, eine Schleifmaschine, einen Rasenmäher oder dergleichen handeln. Alternativ kann der Gegenstand auch eine Arbeitskleidung sein, wie beispielsweise eine Sicherheitsweste, oder ein elektronisches Arbeitsgerät, wie beispielsweise ein Smartphone.

Unter einer "Erfassungseinheit" soll insbesondere eine Einheit verstanden werden, welche zur Erfassung des zumindest einen Nutzungsparameters und/oder des zumindest einen Gegenstandsparameters zumindest einen Sensor aufweist. Die Erfassungseinheit ist vorzugsweise zur Erfassung mehrerer Nutzungsparameter und/oder mehrerer Gegenstandsparameter vorgesehen und kann dazu mehrere Sensoren umfassen. Die Erfassungseinheit kann insbesondere Teil des Gegenstands sein. Alternativ kann die Erfassungseinheit von dem Gegenstand separat ausgebildet sein und vorzugsweise Teil einer externen Einheit sein. Die Erfassungseinheit und/oder insbesondere ein Sensorpaket der Erfassungseinheit umfasst insbesondere als Sensor zumindest einen Photosensor, vorzugsweise einen CCD-Sensor (*charge-coupled device*), zumindest einen Kraftsensor, zumindest einen Drucksensor, zumindest einen Beschleunigungssensor, insbesondere zumindest einen Hall-Sensor, zumindest einen Ortssensor, insbesondere zumindest einen GPS-Sensor (*Globales Positionsbestimmungssystem*), zumindest einen Stromsensor, zumindest einen Spannungssensor, zumindest einen Widerstandssensor, zumindest einen Leistungssensor, zumindest einen Energiesensor, zumindest einen Vibrationssensor, zumindest einen Schwingungssensor, zumindest einen Schalldrucksensor, insbesondere zumindest einen Piezosensor, zumindest einen Abstandssensor, insbesondere zumindest einen Laser- und/oder Infrarotsensor, zumindest einen Feuchtigkeitssensor oder dergleichen. Insbesondere ist denkbar, dass zur Erfassung verschiedener Parameter und/oder Kenngrößen verschiedene Erfassungseinheiten, verschiedene Sensoren und/oder Sensorpakete insbesondere einer selben Erfassungseinheit vorgesehen sind.

Die externe Einheit kann insbesondere eine mobile, insbesondere elektrische Einheit sein, wie beispielsweise ein Wearable, ein Laptop, ein Tablet, ein Smartphone, eine Smartwatch oder dergleichen, sowie insbesondere ein Sensormodul und/oder ein Kommunikationsmodul. Alternativ kann die externe Einheit Teil einer Firmenzentrale, eines Netzwerks, insbesondere eines Rechnernetzwerks, eines Servers, insbesondere eines Servernetzwerks, vorzugsweise einer Cloud sein. Unter einem "Nutzungsparameter" soll insbesondere ein Kennwert verstanden werden, welcher eine Nutzung des Gegenstands abbildet und/oder welcher zumindest mittelbar, vorzugsweise unmittelbar, mit einer Nutzung des Gegenstands korreliert ist. Vorzugsweise ist der Nutzungsparameter ein Nutzungszeitpunkt, eine Nutzungsdauer, eine Nutzungsanzahl, ein Nutzungsstandort, eine Nutzungsintensität, insbesondere eine Nutzungsbelastung, vorzugsweise ein Nutzungsverschleiß, und/oder ein Nutzungszustand des Gegenstands. Ferner könnte der Nutzungsparameter ein Parameter einer Nutzungsroutine sein, welche bei einer Erstinbetriebnahme durchführbar ist. Eine Nutzungsroutine kann insbesondere eine bestimmte Abfolge von Funktionen, Tastenkombinationen oder dergleichen umfassen. Insbesondere werden bei einer Erstellung des Zertifikats und/oder einer Zuordnung des Gegenstands zu einer Person zumindest zwei, vorzugsweise mehrere dieser Nutzungsparameter, insbesondere verschiedener Parametertypen, verwendet. Der Nutzungsparameter kann insbesondere aus zumindest einem Gerätekennwert ermittelt werden, wie beispielsweise aus einem Strom, einer Spannung, einer Drehzahl, einer Beschleunigung, insbesondere einer Vibration, einer Leistung, einer Orientierung, einer Einschaltanzahl, einer Ausschaltanzahl, einer gegenstandsinternen Laufzeit, einer Abnutzung von Bauteilen, einer Schaltzeit, einem Drehzahlverhalten, einer Temperatur und/oder dergleichen, sowie insbesondere einem Auslösen zumindest einer Sicherheitsfunktion, wie beispielsweise eines Kickbacks. Beispielsweise kann anhand der jeweiligen Einschaltanzahl, Ausschaltanzahl und/oder der gegenstandsinternen Laufzeit die Nutzungsdauer generiert werden. Ferner ist es denkbar, dass der Nutzungsparameter ein Nutzungsverschleiß sein kann. Dieser könnte beispielsweise anhand der Nutzungsdauer und einer Abnutzung bestimmt werden. Der Nutzungszeitpunkt kann insbesondere ein Erstbetriebszeitpunkt sein. Die Nutzungsdauer kann insbesondere eine Dauer, insbesondere eine Gesamtnutzungsdauer von Komponenten und/oder Bauteilen und/oder der gesamten Handwerkzeugmaschine und/oder der Arbeitskleidung sein, wie beispielsweise zumindest eines Motors, insbesondere zumindest einer Betriebsrichtung des Motors, zumindest einer Elektronik, zumindest eines Werkzeugs, wie beispielsweise zumindest eines Schraubers, zumindest eines Bohrers, zumindest eines Meißels oder dergleichen, zumindest eines Energiespeichers, wie beispielsweise zumindest eines Akkumulators und/oder zumindest einer Batterie, und zwar vorzugsweise zumindest eine Aufladedauer und/oder zumindest eine Entladedauer, zumindest eine Überlastbetriebsdauer oder dergleichen sein. Ferner kann die Nutzungsanzahl insbesondere eine Anzahl von Ein- und/oder Ausschaltvorgängen, eine Anzahl von Lade- und/oder Entladezyklen des Energiespeichers, eine Anzahl ausgelöster Wechselrichterschaltungen einer Elektronik und/oder eines Motors, eine Nutzungsanzahl von Werkzeugen, eine Anzahl von ausgelösten Schutzfunktionen, wie beispielsweise eines Kickbacks, eines Neustarts und/oder eines Resets, eine Anzahl von fehlerhaften Nutzungen, wie beispielsweise durch Herunterfallen und/oder unsachgemäße Lagerung, oder eine Anzahl von Fehlermeldungen sein. Die Nutzungsintensität ist insbesondere eine vorzugsweise durchschnittliche, prozentuale und/oder maximale Leistung der Handwerkzeugmaschine und/oder der Arbeitskleidung, zumindest eine Stromintensität, zumindest eine Spannungsintensität eine Phasenverschiebung zwischen Strom und Spannung und/oder eine vorzugsweise durchschnittliche und/oder maximale Drehzahl oder Drehzahländerung und/oder eine Überlast. Ferner kann die Nutzungsintensität zumindest eine Schwingungsintensität, zumindest eine Vibrationsintensität, zumindest eine Schallemissionsintensität, ein vorzugsweise durchschnittliches, prozentuale und/oder maximales Drehmoment, ein vorzugsweise durchschnittlicher, prozentuale und/oder maximaler Wirkungsgrad, zumindest eine Anpresskraft, insbesondere zumindest eine Anpresskraftintensität und/oder eine Schlagenergie, sein. Die Nutzungstemperatur ist insbesondere eine durchschnittliche, prozentuale und vorzugsweise eine maximale Temperatur, vorzugsweise ein Temperaturgradient und zwar insbesondere vor, nach und/oder während eines Betriebs der Handwerkzeugmaschine und/oder der Arbeitskleidung, und zwar insbesondere des Motors, des Energiespeichers, des Werkzeugs, wie beispielsweise eines Bohrers, Schraubers und/oder Meißels, oder eines Zubehörs und/oder einer Umgebung der Handwerkzeugmaschine und/oder der Arbeitskleidung. Der Nutzungszustand ist insbesondere ein Zustand der Handwerkzeugmaschine und/oder der Arbeitskleidung, wie beispielsweise ein Fehlerzustand, ein Ruhezustand, ein Arbeitszustand, ein Ladezustand des Energiespeichers und/oder ein Zustand eines Deratings zumindest einer elektrischen Komponente der Handwerkzeugmaschine und/oder der Arbeitskleidung, wie beispielsweise einer Elektronik, des Energiespeichers und/oder eines Motors. Der Nutzungsverschleiß ist insbesondere eine zeitliche Veränderung zumindest eines Bauteils der Handwerkzeugmaschine und/oder der Arbeitskleidung und/zwar insbesondere eines Werkzeugs und/oder einer elektrischen Komponente, wie beispielsweise eines Innenwiderstands des Energiespeichers, einer Lade- und/oder Entladekurve des Energiespeichers und/oder einer Derating-Kurve.

Unter einem "Gegenstandsparameter" soll insbesondere ein Standort, ein Fertigstellungszeitpunkt, ein Produktionsparameter, ein Instandhaltungsparameter, wie insbesondere ein Instandhaltungszeitpunkt, eine Angabe einer instand zuhaltenden Komponente des Gegenstands, und/oder ein Vertriebsparameter verstanden werden. Unter einem "Vertriebsparameter" soll insbesondere ein Kennwert verstanden werden, welcher einen Vertrieb, wie insbesondere einen Verkauf und/oder eine Vermietung, des Gegenstands kennzeichnet und/oder mit diesem korreliert ist, wie insbesondere ein Kaufzeitpunkt, vorzugsweise ein Kaufdatum, ein Kaufbeleg, eine Verkäuferinformation, wie vorzugsweise ein Verkaufsort, eine Besitzerinformation, eine Vorbesitzerinformation, ein Vermietungszeitpunkt, vorzugsweise ein Vermietungsdatum, ein Vermietungsbeleg, eine Vermietungsinformation, wie vorzugsweise ein Vermietungsort oder eine Mieterinformation, oder dergleichen. Unter einem "Produktionsparameter" soll insbesondere ein Kennwert verstanden werden, welcher eine Produktion des Gegenstands kennzeichnet und/oder mit diesem korreliert ist, wie insbesondere eine Seriennummer, ein Produktionszeitpunkt, vorzugsweise ein Produktionsdatum, eine Produktionsinformation, wie vorzugsweise ein Produktionsort, oder dergleichen. Unter einer "Recheneinheit" soll insbesondere eine Einheit mit einem vorzugsweise kabellosen Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Insbesondere ist auf der Recheneinheit das Verfahren zur Generierung der Kennung des Gegenstands hinterlegt. Vorzugsweise sind die Bauteile der Recheneinheit auf einer gemeinsamen Platine angeordnet und/oder vorteilhaft in einem gemeinsamen Gehäuse angeordnet. Die Recheneinheit ist insbesondere Teil des Gegenstands. Alternativ kann die Recheneinheit von dem Gegenstand separat ausgebildet sein und vorzugsweise Teil einer externen Einheit sein. Unter einem "Zertifikat" soll insbesondere eine Kennung verstanden werden, welche den Gegenstand kennzeichnet und welche insbesondere Eigenschaften des Gegenstands und/oder dem Gegenstand zugehörige Informationen umfasst. Vorzugsweise fasst das Zertifikat zumindest einen Nutzungsparameter und/oder Gegenstandsparameter, vorzugsweise zumindest zwei Nutzungsparameter und/oder Gegenstandsparameter und besonders bevorzugt zumindest zwei verschiedene Parametertypen, wie insbesondere zumindest einen Nutzungsparameter und zumindest einen Gegenstandsparameter, zusammen. Ferner ist es denkbar, dass zumindest ein Zertifikat und zumindest ein weiteres Zertifikat zu zumindest einem Hauptzertifikat zusammengefasst werden können. Alternativ oder zusätzlich ist dem Zertifikat zumindest ein Autorisierungsparameter und/oder ein Verschlüsselungsparameter zugeordnet. Der Autorisierungsparameter umfasst insbesondere eine Berechtigung für ein Speichern, Ändern und/oder Abfragen des Zertifikats. Der Verschlüsselungsparameter umfasst insbesondere zumindest einen Schlüssel zu einer Verschlüsselung und/oder Entschlüsselung des Zertifikats.
Eine Ausgestaltung des Zertifikats ist insbesondere abhängig von einer Kombination des zumindest einen Gegenstandsparameters und/oder des zumindest einen Nutzungsparameters, mittels deren das Zertifikat erstellt wird. Vorzugsweise ist das Zertifikat ein Betriebszertifikat, ein Echtheitszertifikat und/oder vorzugsweise ein Ersatzzertifikat, welches dazu vorgesehen ist, ein Garantiezertifikat, wie beispielsweise einen Kaufbeleg, einen Garantieschein oder dergleichen für den Gegenstand zumindest zeitweise oder vollständig zu ergänzen und/oder zu ersetzen. Ferner ist es denkbar, dass das Zertifikat als ein Produktionszertifikat ausgebildet ist, welches insbesondere zumindest Parameter einer Produktion zusammenfasst, als zumindest ein Testzertifikat, welches zumindest Parameter einer Nutzungsintensität zusammenfasst, als zumindest ein Registrierzertifikat, welches Parameter einer Identität des Gegenstands und/oder einer dem Gegenstand zugeordneten Person zusammenfasst, als zumindest ein Erstbetriebszertifikat, welches insbesondere Parameter eines Erstbetriebs zusammenfasst, als zumindest ein Instandhaltungszertifikat, welches insbesondere Parameter einer Instandhaltung des Gegenstands zusammenfasst, als zumindest ein Sicherheitszertifikat, welches Parameter einer Betriebssicherheit des Gegenstands zusammenfasst, als zumindest ein Lebenszeitzertifikat, welches insbesondere Parameter einer Nutzungsdauer zusammenfasst, und/oder als zumindest ein Entsorgungszertifikat. Denkbar ist, dass bei einer Verwendung des Ersatzzertifikats vollständig auf einen handelsüblichen Kaufbeleg oder Garantieschein verzichtet werden kann. Alternativ oder zusätzlich könnte das Zertifikat zu einem, insbesondere bargeldlosen, Erwerb des Gegenstands, von Zubehör und/oder zu einer Buchung von Serviceleistungen, wie beispielsweise einer Instandhaltung, Wartung und/oder Reparatur, oder dergleichen, insbesondere im elektronischen Handel, wie insbesondere über ein Online-Portal, Internethandel, E-Commerce oder dergleichen, vorgesehen sein und dort vorteilhaft als digitaler Kaufbeleg dienen. Beispielsweise kann das Zertifikat als eine Kartennummer einer insbesondere in den Gegenstand eingebauten SIM-Karte (Subscriber Identity Module) und/oder GSM-Karte (Global System for Mobile Communications) und/oder als eine in einer Speichereinheit des Gegenstands hinterlegten IMEI-Nummer (International Mobile Station Equipment Identity) sein.

Es wird ferner vorgeschlagen, dass in zumindest einem Verfahrensschritt wenigstens mittels der Recheneinheit zumindest anhand des zumindest einen Nutzungsparameters und/oder des zumindest einen Gegenstandsparameters wenigstens ein Erstbetriebszeitpunkt des Gegenstands ermittelt wird und abhängig von diesem das Zertifikat erstellt wird. Unter einem "Erstbetriebszeitpunkt" soll insbesondere ein Zeitpunkt eines Erstbetriebs eines Gegenstands durch einen Endkunden verstanden werden. Der Erstbetrieb ist insbesondere verschieden von einem Testbetrieb, welcher beispielsweise bei einer Produktion und/oder bei einem Vertrieb durchgeführt werden kann. Der Erstbetrieb kann beispielsweise erkannt werden, wenn der Nutzungsparameter einen Nutzungsgrenzwert überschreitet, ab welchem ein Erstbetrieb angenommen wird. Der Grenzwert wird dabei derart angesetzt, dass in einem Testbetrieb der Nutzungsparameter den Grenzwert nicht überschreitet. Ist der Nutzungsparameter beispielsweise eine Nutzungsdauer, kann bei einer Überschreitung eines Nutzungsgrenzwerts, insbesondere einer Nutzungsgrenzdauer, ein Erstbetrieb festgestellt werden. Vorzugsweise kann mit einem weiteren Nutzungsparameter, wie beispielsweise einem Nutzungszeitpunkt, der Erstbetriebszeitpunkt bestimmt werden. Vorteilhaft kann der Erstbetriebszeitpunkt bei der Erstellung des Ersatzzertifikats einen Kaufzeitpunkt ersetzten. Es kann vorteilhaft eine Erkennung eines Erstbetriebs verbessert werden. Insbesondere kann vermieden werden, dass ein Testbetrieb, wie beispielsweise bei einer Produktion und/oder einem Verkauf des Gegenstands, mit einem Erstbetrieb verwechselt werden kann. Weiter vorteilhaft kann ein von einem Kaufzeitpunkt abweichender Erstbetriebszeitpunkt bei der Erstellung des Ersatzzertifikats berücksichtigt werden, wodurch insbesondere eine Gewährleistung verlängert werden kann. Besonders bevorzugt kann eine Nutzungsangepasste Gewährleistung bereitgestellt werden, welche sich insbesondere über eine gesetzliche Gewährleistung hinaus erstreckt.

Des Weiteren wird vorgeschlagen, dass in zumindest einem Verfahrensschritt wenigstens mittels der Recheneinheit anhand zumindest eines in einer Speichereinheit hinterlegten Vertriebsparameters und/oder Produktionsparameters der ermittelte Erstbetriebszeitpunkt verifiziert wird. Die Speichereinheit kann insbesondere eine interne Speichereinheit des Gegenstands sein. Die Speichereinheit kann alternativ verschieden und/oder separat von dem Gegenstand ausgebildet sein. Insbesondere kann die Speichereinheit Teil einer externen Einheit sein. Denkbar ist, dass die Speichereinheit Teil der Recheneinheit ist. Denkbar ist, dass mittels der Erfassungseinheit der Vertriebsparameter und/oder der Produktionsparameter erfasst wird und insbesondere in der Speichereinheit hinterlegt wird. Insbesondere dazu kann die Speichereinheit als ein Teil des Gegenstands ausgebildet sein, vorzugsweise als ein Speicherchip, wie beispielsweise eine SIM-Karte, als eine GSM-Karte, und/oder als Teil einer Gegenstandselektronik, einer externen Elektronik oder dergleichen. Vorzugsweise bei einer Produktion und/oder bei einem Vertrieb, insbesondere bei einem Verkauf und/oder Verleih, des Gegenstands wird der Vertriebsparameter und/oder der Produktionsparameter in der Speichereinheit hinterlegt. Insbesondere ist denkbar, dass der Vertriebsparameter und/oder der Produktionsparameter durch einen Benutzer in der Speichereinheit zu einer Verifizierung des Erstbetriebszeitpunkts hinterlegt werden kann. Es kann vorteilhaft ein Erstbetriebszeitpunkt bei einer Erstellung des Ersatzzertifikats berücksichtigt werden. Weiter vorteilhaft kann eine fehlerhafte Bestimmung eines Erstbetriebszeitpunkts vermieden werden. Besonders vorteilhaft kann ein Missbrauch durch Manipulation von Vertriebsparametern und/oder Produktionsparametern vermieden werden.

Weiterhin wird vorgeschlagen, dass in zumindest einem Verfahrensschritt wenigstens mittels der Recheneinheit anhand des zumindest einen Vertriebsparameters und/oder des zumindest einem Produktionsparameters und des ermittelten Erstbetriebszeitpunkts ein Alter des Gegenstands berechnet wird und abhängig von diesem das Zertifikat erstellt wird. Insbesondere kann anhand des Nutzungsparameters ein Nutzungszeitraum bestimmt werden, welcher sich aus der Differenz des Alters des Gegenstands und des Zeitraums zwischen dem Kaufzeitpunkt und einem jeweiligen Nutzungszeitpunkt, insbesondere eines Erstbetriebszeitpunkts, berechnet und bei einer Erstellung des Zertifikats berücksichtigt wird. Besonders bevorzugt ersetzt der Erstbetriebszeitpunkt einen Kaufzeitpunkt, insbesondere im Rahmen einer Gewährleistung, für den Fall, dass der Kaufzeitpunkt wesentlich von dem Erstbetriebszeitpunkt abweicht. Darunter, dass der Erstbetriebszeitpunkt "wesentlich vom Kaufzeitpunkt abweicht", soll insbesondere verstanden werden, dass der Kaufzeitpunkt und der Erstbetriebszeitpunkt um zumindest fünf Stunden, vorzugsweise zumindest fünfzehn Stunden und besonders bevorzugt um zumindest dreißig Stunden auseinander liegen. Insbesondere kann bei einer Bestimmung eines zeitlichen Abstands zwischen Betriebszeitpunkt und Kaufzeitpunkt ein Gegenstandsspezifischer Korrekturfaktor, welcher abhängig ist von einer durchschnittlichen Benutzungsdauer des Gegenstands insbesondere pro Tag ist, gewichtet werden. Insbesondere umfasst der Korrelationsfaktor einen Wert von einer Stunde pro Tag und besonders bevorzugt von einer halben Stunde pro Tag. Es kann vorteilhaft ein Ersatzzertifikat erstellt werden, welches Zeitdauern, wie beispielsweise von Transport und/oder Lagerung, von einer Gewährleistungszeit ausschließen kann, wodurch eine Gesamtgewährleistungszeit verlängert werden kann.

Es wird ferner vorgeschlagen, dass in zumindest einem Verfahrensschritt wenigstens mittels der Recheneinheit zumindest anhand des zumindest einen Nutzungsparameters und/oder des zumindest einen Gegenstandsparameters zumindest eine Anwendung des Gegenstands ermittelt wird und abhängig von diesem das Zertifikat erstellt wird. Insbesondere kann im Laufe einer Lebenszeit des Gegenstands das Zertifikat bei einer sich ändernden Anwendung angepasst werden. Insbesondere kann eine Hauptanwendung des Gegenstands ermittelt werden. Unter einer "Hauptanwendung" soll insbesondere in diesem Zusammenhang eine Anwendung verstanden werden, deren Anwendungszeitraum zumindest 50 %, vorzugsweise zumindest 70 % und besonders bevorzugt zumindest 90 % eines Gesamtanwendungszeitraums des Gegenstands umfasst. Es kann das Ersatzzertifikat spezifisch auf die Anforderungen der Anwendung bei Erstellung abgestimmt und/oder während einer Laufzeit angepasst werden. Insbesondere können auf bestimmte Anwendungen, insbesondere Hauptanwendungen, abgestimmte Zusatzleistungen angeboten werden. Ferner können Anwendungen, für welche der Gegenstand nicht vorgesehen ist, aus einem Gewährleistungsumfang des Ersatzzertifikats ausgeschlossen werden.

Weiterhin wird vorgeschlagen, dass in zumindest einem Verfahrensschritt wenigstens mittels der Erfassungseinheit innerhalb zumindest eines Zeitintervalls, insbesondere während einer Gewährleistungszeit des Zertifikats, Nutzungsparameter und/oder Gegenstandsparameter erfasst werden, die von der Recheneinheit zu einer Anpassung des erstellten Zertifikats verarbeitet werden. Es kann vorteilhaft eine kontinuierliche Anpassung des Zertifikats während einer Lebensdauer des Gegenstands erzielt werden. Weiter vorteilhaft kann eine kontinuierliche Überwachung des Gegenstands erfolgen.

Ferner wird vorgeschlagen, dass in zumindest einem Verfahrensschritt zur Erstellung des Zertifikats und/oder zur Zuordnung zumindest mittels der Erfassungseinheit zumindest ein zumindest als ein Nutzungszeitpunkt, eine Nutzungsdauer, eine Nutzungsanzahl, ein Nutzungsstandort, eine Nutzungsintensität, und/oder ein Nutzungszustand des Gegenstands ausgebildeter Nutzungsparameter erfasst wird. Es kann vorteilhaft eine einfache Nutzungsparametererfassung erzielt werden.

Es wird des Weiteren vorgeschlagen, dass in zumindest einem Verfahrensschritt mittels der Recheneinheit der Gegenstand in Abhängigkeit von zumindest einem Identifikationsparameter der Person der Person zugeordnet wird, wobei bei einer wiederholten Zuordnung mittels des gleichen Identifikationsparameter wenigstens mittels der Recheneinheit eine Zuteilung von Nutzungsrechten für die Person zumindest initiiert wird. Unter einem "Identifikationsparameter" soll insbesondere ein Kennwert verstanden werden, welcher eine Person und/oder ein mit der Person bereits verknüpftes Nutzerkonto, einen weiteren Gegenstand, wie beispielsweise ein Wearable, einen Laptop, ein Smartphone, ein Tablet, eine Smartwatch oder dergleichen, sowie insbesondere eine Arbeitskleidung kennzeichnet. Insbesondere kann der Identifikationsparameter eine dem Nutzer zugordnete Identifikationsnummer, ein PIN, ein Fingerabdruck, ein Irisabbild oder dergleichen sein. Insbesondere ist denkbar, dass bei einer wiederholten Zuordnung mit demselben Identifikationsparameter eine Person als ein Hauptnutzer und/oder als ein Ansprechpartner für eine Verwaltung, Instandhaltung, Wartung und/oder Reparatur des Gegenstands gekennzeichnet werden kann und dieser vorzugsweise Hauptnutzungsrechte zugewiesen werden können. Unter einem "Hauptnutzer" soll insbesondere eine Person verstanden werden, welche den Gegenstand zu zumindest 50 %, vorzugsweise zu zumindest 70 % und besonders bevorzugt zu zumindest 90 % einer Gesamtverwendungszeit des Gegenstands nutzt. Es kann vorteilhaft eine Zuordnung zu einer Person verbessert und insbesondere besonders sicher gestaltet werden. Ferner ist es denkbar, dass ein Zertifikat zu einer Zuordnung einer Person den Identifikationsparameter umfasst.

Zudem wird vorgeschlagen, dass in zumindest einem Verfahrensschritt der zumindest eine Nutzungsparameter und/oder der zumindest eine Gegenstandsparameter mittels einer, insbesondere kabellosen, Kommunikationseinheit zu einer Erstellung des zumindest einen Zertifikats und/oder zu einer Zuordnung des Gegenstands zu einer Person an zumindest eine externe Einheit, insbesondere eine die Recheneinheit umfassende externe Einheit, übertragen wird. Unter einer "Kommunikationseinheit" soll insbesondere eine Einheit verstanden werden, welche zumindest zu einer elektronischen, vorzugsweise kabellosen Informationsübertragung vorgesehen ist. Die Kommunikationseinheit ist insbesondere zu einer autorisierten und/oder verschlüsselten Informationsübertragung vorgesehen, welche insbesondere abhängig von dem zumindest einen Autorisierungsparameter und/oder dem zumindest einen Verschlüsselungsparameter des Zertifikats ist. Insbesondere ist die Kommunikationseinheit zu einer Informationsübertragung per Funk, wie beispielsweise über W-LAN, Bluetooth, Nahfeldkommunikation, Transponder, wie beispielsweise mittels eines RFID-Chips, drahtlose Netzwerke mit geringen Datenaufkommen, wie insbesondere ZigBee, mittels Datentransferprotokollen, wie insbesondere ANT+, LoRa, NBloT, oder dergleichen, und/oder zu einer optischen Informationsübertragung, wie beispielsweise Infrarot, vorgesehen. Die Kommunikationseinheit kann insbesondere Teil des Gegenstands und/oder der externen Einheit sein. Denkbar ist, dass die Kommunikationseinheit Teil eines Wearable, eines Laptops, eines Smartphones, eines Tablets, einer Smartwatch oder dergleichen und/oder von Arbeitskleidung sein kann. Es kann vorteilhaft eine flexible Übertragung von Nutzungsparametern erreicht werden.

Es wird ferner vorgeschlagen, dass in zumindest einem Verfahrensschritt das zumindest eine erstellte Zertifikat und/oder die Zuordnung des Gegenstands zu der Person mittels einer, insbesondere kabellosen, Kommunikationseinheit an zumindest eine externe Einheit übertragen wird. Es kann vorteilhaft eine Erstellung des Zertifikats innerhalb des Gegenstands erfolgen. Vorzugsweise kann ein Rechenaufwand der externen Einheit verringert werden. Zudem kann eine Bereitstellung des Zertifikats vereinfacht werden.

In einem weiteren Aspekt der Erfindung wird ein System zur Generierung zumindest einer Kennung, insbesondere mittels des vorhergehenden Verfahrens, vorgeschlagen, mit zumindest einem Gegenstand, insbesondere einer Werkzeugmaschine, mit zumindest einer Erfassungseinheit, welche dazu vorgesehen ist, zumindest einen Nutzungsparameter und/oder zumindest einen Gegenstandsparameter des Gegenstands zu erfassen, und mit zumindest einer Recheneinheit, welche dazu vorgesehen ist, in Abhängigkeit von dem zumindest einen erfassten Nutzungsparameter und/oder dem zumindest einen Gegenstandsparameter ein Zertifikat des Gegenstands zu erstellen und/oder den Gegenstand zumindest einer Person zuzuordnen. Es kann vorteilhaft ein System mit verbesserten Eigenschaften in Bezug auf eine Effizienz einer Verwaltung des Gegenstands bereitgestellt werden.

Die erfindungsgemäße Verfahren und/oder System soll hierbei nicht auf die oben beschriebene Anwendung und Ausführungsform beschränkt sein. Insbesondere kann die erfindungsgemäße Verfahren und/oder System zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Teil eines Systems zur Generierung einer Kennung in einer schematischen Ansicht,
- Fig. 2: einen schematischen Ablaufplan eines beispielhaften Verfahrens zur Generierung der Kennung und
- Fig. 3: einen weiteren schematischen Ablaufplan des Verfahrens zur Generierung der Kennung.

### Beschreibung des Ausführungsbeispiels

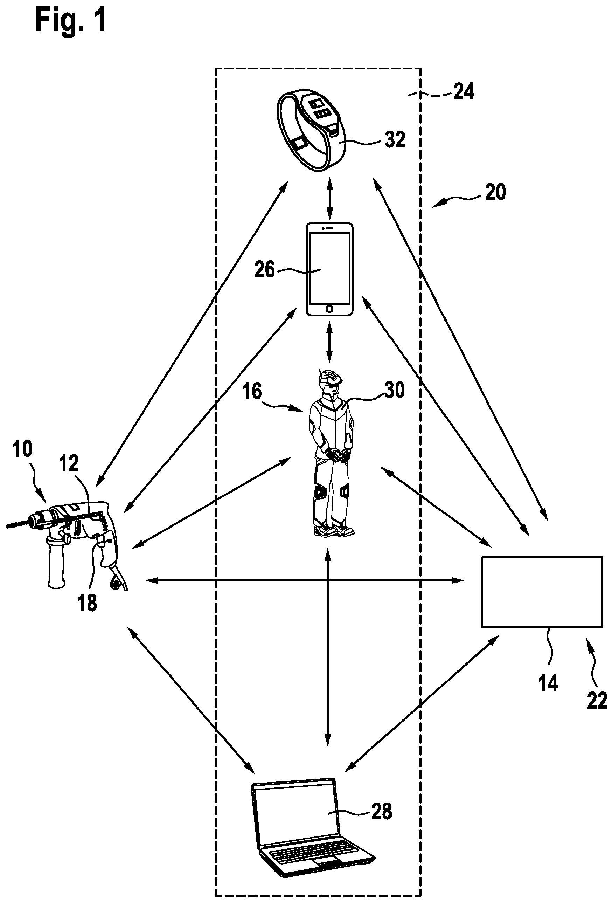

In Figur 1 ist eine schematische Darstellung eines Systems zur Generierung zumindest einer Kennung wenigstens eines Gegenstands 10 dargestellt. Das System umfasst zumindest den Gegenstand 10. Der Gegenstand 10 ist im vorliegenden Fall als eine Handwerkzeugmaschine ausgebildet und zwar insbesondere als ein Schlagbohrer. Alternativ oder zusätzlich kann der Gegenstand 10 auch als ein beliebiger, einem Fachmann vorteilhaft erscheinender Gegenstand 10 ausgebildet sein, wie beispielsweise als ein Schwingschleifer, eine Gartenwerkzeugmaschine oder dergleichen. Ferner kann das System eine von der hier dargestellten Anzahl abweichende Anzahl an Gegenständen 10 aufweisen, welche insbesondere voneinander verschieden ausgebildet sein können. Insbesondere kann eine Anzahl von Gegenständen 10 einen Gegenstandsbestand ausbilden, zu dessen Verwaltung das System vorgesehen ist. Das System ist dann auch zu einer Generierung von Kennungen der jeweiligen Anzahl an Gegenständen 10 vorgesehen.

Das System umfasst eine Speichereinheit 18. Im vorliegenden Fall ist die Speichereinheit 18 Teil des Gegenstands 10. Die Speichereinheit 18 ist eine interne Speichereinheit 18 des Gegenstands 10. Alternativ kann die Speichereinheit 18 auch Teil einer externen Einheit 22 sein.

In der Speichereinheit 18 ist zumindest ein Vertriebsparameter hinterlegt. Der Vertriebsparameter ist im vorliegenden Fall ein Kaufzeitpunkt, insbesondere ein Kaufdatum. Ferner könnten in der Speichereinheit 18 weitere Vertriebsparamater hinterlegt sein, wie beispielsweise ein Verkaufsort, eine Verkaufsidentifikationsnummer oder dergleichen. Ferner ist in der Speichereinheit 18 zumindest ein Produktionsparameter des Gegenstands 10 hinterlegt. Der Produktionsparameter ist eine Seriennummer. Ferner ist in der Speichereinheit 18 zumindest ein weiterer Produktionsparameter hinterlegt. Der weitere Produktionsparameter ist ein Produktionsdatum.

Das System umfasst zumindest eine Erfassungseinheit 12. Im vorliegenden Fall ist die Erfassungseinheit 12 Teil des Gegenstands 10. Die Erfassungseinheit 12 ist eine interne Erfassungseinheit 12 des Gegenstands 10. Alternativ kann die Erfassungseinheit 12 auch Teil einer externen Einheit 22 sein. Die Erfassungseinheit 12 ist dazu vorgesehen, zumindest einen Nutzungsparameter des Gegenstands 10 zu erfassen. Ferner ist die Erfassungseinheit 12 dazu vorgesehen, einen weiteren Nutzungsparameter zu erfassen. Der Nutzungsparameter ist in der Speichereinheit 18 hinterlegt. Im vorliegenden Fall ist der Nutzungsparameter ein Nutzungszeitpunkt. Der weitere Nutzungsparameter ist in der Speichereinheit 18 hinterlegt. Der weitere Nutzungsparameter ist eine Nutzungsdauer. Alternativ oder zusätzlich können/kann als ein Nutzungsparameter auch ein Nutzungsstandort, eine Nutzungsintensität, und/oder ein Nutzungszustand des Gegenstands 10 erfasst werden und/oder in der Speichereinheit 18 hinterlegt sein. Ferner ist in der Speichereinheit 18 ein Nutzungsgrenzwert hinterlegt. Der Nutzungsgrenzwert ist zum Vergleich mit dem Nutzungsparameter vorgesehen. Ferner kann in der Speichereinheit 18 ein erstelltes Zertifikat hinterlegt werden. Das Zertifikat ist mittels eines dem Zertifikat zugeordneten Autorisierungsparameters hinterlegt. Der Autorisierungsparameter vergibt zumindest ein Zugriffs- und/oder Bearbeitungsrecht für das Zertifikat und/oder für zumindest einen Parameter von Parametern, welche in dem Zertifikat zusammengefasst sind.

Das System umfasst die externe Einheit 22. Die externe Einheit 22 ist im vorliegenden Fall als ein Server ausgebildet. Alternativ oder zusätzlich kann es sich bei der externen Einheit 22 um ein Computernetzwerk, eine Firmenzentrale und/oder eine Cloud handeln.

Das System umfasst zumindest eine Recheneinheit 14. Im vorliegenden Fall ist die Recheneinheit 14 Teil der externen Einheit 22. Alternativ kann die Recheneinheit 14 auch Teil des Gegenstands 10 sein. Die Recheneinheit 14 ist dazu vorgesehen ein Zertifikat des Gegenstands 10 zu erstellen. Die Recheneinheit 14 erstellt das Zertifikat abhängig von dem zumindest dem Nutzungsparameter und insbesondere dem weiteren Nutzungsparameter. Die Recheneinheit 14 ist insbesondere dazu vorgesehen, anhand des Nutzungsparameters und insbesondere des weiteren Nutzungsparameters einen Erstbetriebszeitpunkt zu bestimmen. Der Erstbetriebszeitpunkt ist ein Nutzungszeitpunkt, an welchem eine Nutzungsdauer einen vorgegebenen Nutzungsgrenzwert überschreitet. Alternativ oder zusätzlich ist die Recheneinheit 14 dazu vorgesehen, den Gegenstand 10 zumindest einer Person 16 zuzuordnen.

Ferner umfasst das System zumindest eine Kommunikationseinheit 20. Die Kommunikationseinheit 20 ist als eine kabellose Kommunikationseinheit 20 ausgebildet. Die Kommunikationseinheit 20 verbindet die Erfassungseinheit 12 und/oder die Speichereinheit 18 mit der externen Einheit 22. Die Kommunikationseinheit 20 ist zu einer Übertragung zumindest des Nutzungsparameters, insbesondere zwischen der Gegenstand 10 und der externen Einheit 22 vorgesehen. Ferner ist die Kommunikationseinheit 20 zu einer Übertragung der Vertriebsparameter und/oder der Produktionsparameter vorgesehen. Die Kommunikationseinheit 20 ist zu einer verschlüsselten Übertragung vorgesehen. Die Kommunikationseinheit 20 verschlüsselt das Zertifikat und/oder die zu einer Erstellung des Zertifikats und/oder in dem Zertifikat zusammengefassten Parameter mit zumindest einem dem Zertifikat zugeordneten Verschlüsselungsparameter. Alternativ oder zusätzlich kann die Kommunikationseinheit 20 zu einer Übertragung des erstellten Zertifikats vorgesehen sein. Im vorliegenden Fall umfasst die Kommunikationseinheit 20 zumindest eine mobile Einheit 24. Die mobile Einheit 24 wird ist von einer Person 16 zugeordnet, welche den Gegenstand 10 benutzt. Die mobile Einheit 24 ist vorzugsweise von einem Smartphone 26 ausgebildet. Ferner kann die mobile Einheit 24 von einem Laptop 28, einem Netzwerk, insbesondere einem W-LAN Netzwerk, von einer Arbeitskleidung und/oder einer Smartwatch 32 ausgebildet sein. Alternativ ist es auch denkbar, dass die Kommunikationseinheit 20 Teil des Gegenstands 10 und/oder der externen Einheit 22 ist.

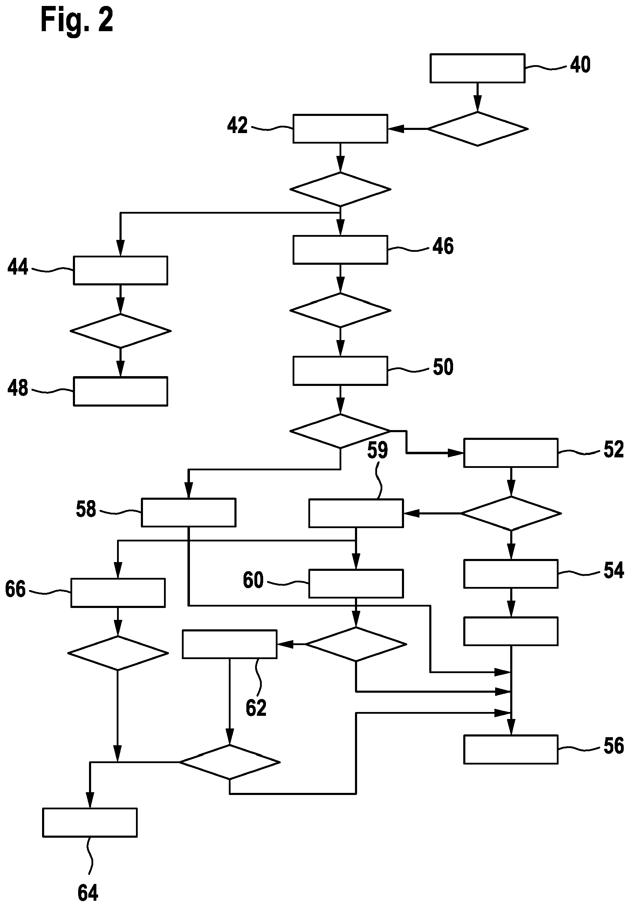

Das System ist zum Ausführen eines Verfahrens zur Generierung einer Kennung vorgesehen. In der Figur 2 ist ein schematischer Ablaufplan des Verfahrens zur Generierung der zumindest einen Kennung dargestellt. Ferner wird in dem Verfahren eine Erstellung zumindest eines Zertifikats beschrieben. Im vorliegenden Fall ist das Zertifikat ein Erstbetriebszertifikat.

Das Verfahren umfasst einen Verfahrensschritt 40. In dem Verfahrensschritt 40 wird der Gegenstand 10 wird mittels der Kommunikationseinheit 20 mit der externen Einheit 22 verbunden. Der Gegenstand 10 wird in einem Gegenstandsbestand registriert. Die in der Speichereinheit 18 hinterlegten Parameter, insbesondere der Nutzungsparameter, der Vertriebsparameter, der weitere Vertriebsparameter, der Produktionsparameter und/oder der weitere Produktionsparameter, werden von der externen Einheit 22 ausgelesen. Die Recheneinheit 14 vergleicht, ob zumindest einer der Parameter, insbesondere der Produktionsparameter, und zwar die Seriennummer des Gegenstands 10, bereits hinterlegt ist. Alternativ oder zusätzlich kann der Produktionsparameter manuell eingegeben und/oder mittels der Erfassungseinheit 12, insbesondere mittels einer Bilderfassung, erfasst werden. Für den Fall, dass der Gegenstand 10, und zwar insbesondere mit dem dazugehörigen Produktionsparameter, im Gegenstandsbestand vorhanden ist, wird der Vorgang abgeschlossen. Alternativ können, insbesondere für einen bereits registrierten Gegenstand 10, mittels der Erfassungseinheit 12 innerhalb zumindest eines Zeitintervalls Nutzungsparameter insbesondere kontinuierlich erfasst werden, die von der Recheneinheit 14 zu einer Anpassung eines erstellten Zertifikats verarbeitet werden.

Das Verfahren umfasst einen Verfahrensschritt 42. Der Verfahrensschritt 42 wird für den Fall, dass die Produktionsparameter, Vertriebsparameter, Nutzungsparameter und/oder der zugehörige Gegenstand 10 noch nicht in der Externen Einheit 22 hinterlegt und/oder registriert sind durchgeführt. In dem Verfahrensschritt 42 wird abgefragt, ob der Gegenstand 10 bereits der Person 16 zugordnet ist. Alternativ kann auch abgefragt werden, ob der Gegenstand 10 einem Nutzer, einem Besitzer, einem Hauptnutzer und/oder einer Firma zugeordnet ist.

Das Verfahren umfasst einen Verfahrensschritt 44. Ist der Gegenstand 10 der Person 16 noch nicht zugeordnet, wird in dem weiteren Verfahrensschritt 44 eine Zuordnung durchgeführt. Ferner kann in dem weiteren Verfahrensschritt 44 wird abgefragt, ob der Gegenstand 10 mit seinem Produktionsparameter bereits einer weiteren Person 16, einem weiteren Nutzer, einem weiteren Besitzer, einem weiteren Hauptnutzer und/oder einer weiteren Firma zugeordnet ist.

Ferner umfasst das Verfahren einen weiteren Verfahrensschritt 48. Ist der Gegenstand 10 mittels seines Produktionsparameters noch nicht zugeordnet einer weiteren Person 16 zugeordnet, wird der Gegenstand 10 in dem Verfahrensschritt 48 zugeordnet.

Das Verfahren umfasst einen weiteren Verfahrensschritt 46. In dem Verfahrensschritt 48 wird abgefragt, ob ein Zertifikat für den Gegenstand 10 erstellt werden soll.

Das Verfahren umfasst einen Verfahrensschritt 50. Der Verfahrensschritt 50 wird ausgeführt, wenn ein Zertifikat erstellt werden soll. In dem Verfahrensschritt 50 wird mittels der Recheneinheit 14, zumindest in Abhängigkeit von dem zumindest einen erfassten Nutzungsparameter, das Zertifikat des Gegenstands 10 erstellt. Ferner kann anhand des zumindest einen Nutzungsparameters zumindest eine Anwendung, insbesondere eine Hauptanwendung, des Gegenstands 10, ermittelt und abhängig von diesem das Zertifikat erstellt werden. Ferner wird mittels der Recheneinheit 14 zumindest anhand des zumindest einen Nutzungsparameters, und zwar insbesondere des Nutzungszeitpunkts, und des weiteren Nutzungsparameters, und zwar insbesondere der Nutzungsdauer, ein Erstbetriebszeitpunkt des Gegenstands 10 ermittelt. Überschreitet beispielsweise bei einer Nutzung des Gegenstands 10 der weitere Nutzungsparameter einen Grenzwert, so wird der Nutzungsparameter zum Zeitpunkt des Überschreitens als der Erstbetriebszeitpunkt angenommen. Ferner wird abhängig vom Erstbetriebszeitpunkt das Zertifikat erstellt oder an den Erstbetriebszeitpunkt angepasst. Ferner wird in dem Verfahrensschritt 50 ein Alter des Gegenstands 10 bestimmt. Dazu wird mittels der Recheneinheit 14 anhand zumindest des in der Speichereinheit 18 hinterlegten Vertriebsparameters und/oder Produktionsparameters der ermittelte Erstbetriebszeitpunkt verifiziert. Das Alter wird aus der Differenz des Erstbetriebszeitpunkts und des weiteren Produktionsparameters bestimmt. Beispielsweise kann ein Fehler ausgegeben werden, wenn ein Erstbetriebszeitpunkt vor einem Kaufzeitpunkt des Vertriebsparameters liegt.

Das Verfahren umfasst einen weiteren Verfahrensschritt 52. Der weitere Verfahrensschritt 52 wird durchgeführt, wenn der Erstbetriebszeitpunkt um mehr als fünf Stunden vom Kaufzeitpunkt abweicht. In dem Verfahrensschritt 52 wird ein weiterer Vertriebsparameter, und zwar insbesondere ein Kaufzeitpunkt, abgefragt. In dem Verfahrensschritt 52 wird abgefragt, ob ein Kaufbeleg vorhanden ist.

Das Verfahren umfasst einen weiteren Verfahrensschritt 54. Der Verfahrensschritt 54 wird durchgeführt für den Fall, dass der Kaufbeleg vorhanden ist. Alternativ ist es denkbar, dass kein Kaufbeleg vorhanden ist oder dieser verloren wurde, so dass für diesen Fall das Zertifikat den Kaufbeleg ersetzen kann. In dem Verfahrensschritt 54 wird der Kaufbeleg eingelesen. Insbesondere ist es denkbar, dass der Kaufbeleg mittels der Erfassungseinheit 12 eingelesen wird. Der weitere Vertriebsparameter wird aus dem Kaufbeleg ausgelesen.

Das Verfahren umfasst einen weiteren Verfahrensschritt 56. In dem Verfahrensschritt 56 werden die erfassten Parameter an die externe Einheit 22 mittels der Kommunikationseinheit 20 übermittelt. Die Registrierung des Gegenstands 10 in dem Gegenstandsbestand wird abgeschlossen, indem für den Gegenstand 10 ein Ersatzzertifikat erstellt wird und/oder der Gegenstand 10 der Person 16 zugeordnet wird. Im vorliegenden Fall tritt das Ersatzzertifikat an Stelle eines Kaufbelegs.

Das Verfahren umfasst einen weiteren Verfahrensschritt 58. In dem Verfahrensschritt 58 wird für den Fall, dass der Erstbetriebszeitpunkt um weniger als fünf Stunden vom Kaufzeitpunkt abweicht, der Erstbetriebszeitpunkt gleich dem Kaufzeitpunkt gesetzt. Nach dem Verfahrensschritt 58 wird der Verfahrensschritt 56 ausgeführt.

Das Verfahren umfasst einen weiteren Verfahrensschritt 59. Der Verfahrensschritt 59 wird durchgeführt, wenn kein Kaufbeleg vorhanden ist. Der kaufzeitpunkt wird von der Person 16 eingegeben.

Das Verfahren umfasst einen weiteren Verfahrensschritt 60. Der eingegebene Kaufzeitpunkt wird mittels des Erstbetriebszustands verifiziert. Stimmt der eingegebene Kaufzeitpunkt im Wesentlichen mit dem Erstbetriebszeitpunkt überein, wird der Verfahrensschritt 56 ausgeführt.

Das Verfahren umfasst einen weiteren Verfahrensschritt 62. Der weitere Verfahrensschritt 62 wird durchgeführt, wenn der angegebene Kaufzeitpunkt wesentlich von dem Erstbetriebszeitpunkt abweicht und zwar insbesondere um mehr als fünf Stunden. Der Erstbetriebszeitpunkt wird als Kaufzeitpunkt vorgeschlagen. Die Person 16 kann den Erstbetriebszeitpunkt als Kaufzeitpunkt akzeptieren. Wird der Erstbetriebszeitpunkt als Kaufzeitpunkt akzeptiert, wird mit dem Verfahrensschritt 56 weiter verfahren.

Das Verfahren umfasst den weiteren Verfahrensschritt 64. Der Verfahrensschritt 64 wird durchgeführt, wenn der Vorschlag den Erstbetriebszeitpunkt als Kaufzeitpunkt zu übernehmen nicht akzeptiert wird. In dem Verfahrensschritt 64 wird ausgegeben, dass der Gegenstand 10 nicht registrierbar ist. Ferner kann alternativ oder zusätzlich eine Verbindung mit einem Servicezentrum hergestellt werden.

Das Verfahren umfasst einen weiteren Verfahrensschritt 66. Der weitere Verfahrensschritt 66 wird nach dem Verfahrensschritt 58, insbesondere als Alternative zum Verfahrensschritt 60, durchgeführt. In dem Verfahrensschritt 66 wird der Kaufzeitpunkt anhand des Produktionsparameters, insbesondere der Seriennummer verifiziert. Wurde die Seriennummer beispielsweise zu dem angegebenen Kaufzeitpunkt noch nicht vergeben, wird ein Fehler erkannt. Es wird mit dem Verfahrensschritt 64 fortgefahren.

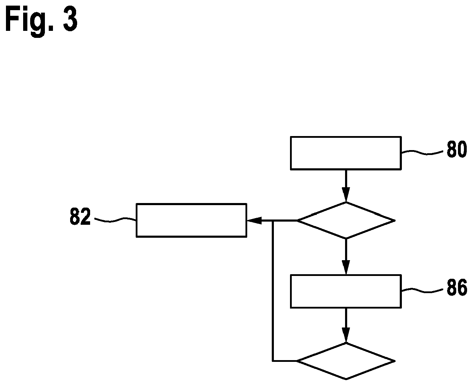

In Figur 3 sind weitere Verfahrensschritte des Verfahrens gezeigt.

Das Verfahren umfasst einen Verfahrensschritt 80. In dem Verfahrensschritt 80 wird der Gegenstand 10 in einem Gegenstandsbestand registriert. Der Gegenstand 10 wird mittels der Kommunikationseinheit 20 mit der externen Einheit 22 verbunden. Die in der Speichereinheit 18 hinterlegten Parameter, insbesondere der Nutzungsparameter, der Vertriebsparameter, der weitere Vertriebsparameter, der Produktionsparameter und/oder der weitere Produktionsparameter werden ausgelesen. Ferner wird mittels der Recheneinheit 14 der Gegenstand 10 in Abhängigkeit von zumindest einem Identifikationsparameter der Person 16 der Person 16 zugeordnet. Die Recheneinheit 14 gleicht ab, ob für den Gegenstand 10 bereits ein Hauptnutzer hinterlegt ist.

Das Verfahren umfasst einen weiteren Verfahrensschritt 82. Für den Fall, dass bereits ein Hauptnutzer hinterlegt ist, wird ein Verfahrensschritt 82 ausgeführt. In dem Verfahrensschritt 82 fragt die Recheneinheit 14 ab, ob bereits ein zentraler Ansprechpartner für eine Verwaltung, Instandhaltung, Wartung und/oder Reparatur hinterlegt ist. Für den Fall, dass noch kein Ansprechpartner hinterlegt ist, wird die zugeordnete Person 16 als Ansprechpartner hinterlegt.

Das Verfahren umfasst einen weiteren Verfahrensschritt 86. Für den Fall, dass es einen Hauptnutzer gibt, wird in einem Verfahrensschritt 86 der Hauptnutzer als Ansprechpartner hinterlegt. Beispielsweise kann eine Person 16, welche wiederholt dem Gegenstand 10 zugeordnet wird, als Hauptnutzer hinterlegt werden. Dazu wird bei einer wiederholten Zuordnung mittels des gleichen Identifikationsparameters wenigstens mittels der Recheneinheit 14 eine Zuteilung von Nutzungsrechten für die Person 16 initiiert.

Wie anhand des beispielhaften Verfahrens in den Figuren 2 und 3 dargestellt, können verschiedene Parameter zu einem Zertifikat zusammengefasst werden. Im Folgenden ist die Erstellung des Zertifikats aus Figur 2 beispielhaft zusammengefasst. Ferner wird im Folgenden anhand weiterer Beispiele die Erstellung weiterer Zertifikate erläutert.

Im vorliegenden Fall ist das Zertifikat als ein Erstbetriebszertifikat ausgebildet. Das Zertifikat wird zumindest anhand des Nutzungsparameters erstellt. Der Nutzungsparameter ist ein Nutzungszeitpunkt. Das Zertifikat wird zumindest anhand des weiteren Nutzungsparameters erstellt. Der weitere Nutzungsparameter ist eine Nutzungsdauer. Zumindest anhand des Nutzungsparameters und des weiteren Nutzungsparameters wird der Erstbetriebszeitpunkt bestimmt. Der Erstbetriebszeitpunkt ist ein Nutzungszeitpunkt, an welchem eine Nutzungsdauer einen vorgegebenen Nutzungsdauergrenzwert überschreitet. Alternativ kann der Erstbetriebszeitpunkt anhand einer Nutzungsroutine, wie beispielsweise einer Tastenkombination, ermittelt werden.

Alternativ oder zusätzlich kann in dem Verfahren zumindest ein weiteres Zertifikat erstellt werden. Ferner wird zumindest ein erstes weiteres Zertifikat erstellt. Im vorliegenden Fall ist das erste weitere Zertifikat als ein Produktionszertifikat ausgebildet. Das erste weitere Zertifikat wird zumindest anhand eines Geräteparameters erstellt. Der Geräteparameter ist ein Produktionsparameter, und zwar insbesondere ein Produktionszeitpunkt, wie beispielsweise ein Datum und/oder eine Uhrzeit, an/zu welchem/welcher der Gegenstand produziert und insbesondere fertiggestellt ist. Ferner wird das erste weitere Zertifikat aus zumindest einem weiteren Gegenstandsparameter erstellt. Der weitere Gegenstandsparameter ist im vorliegenden Fall ein Produktionsparameter, und zwar insbesondere eine Seriennummer und/oder eine Bare Tool Number des Gegenstands.

Alternativ oder zusätzlich kann in dem Verfahren zumindest ein zweites weiteres Zertifikat erstellt werden. Im vorliegenden Fall ist das zweite weitere Zertifikat als ein Testzertifikat ausgebildet. Das zweite weitere Zertifikat wird zumindest anhand eines ersten weiteren Nutzungsparameters erstellt. Der erste weitere Nutzungsparameter ist eine Nutzungsintensität, wie beispielsweise eine maximale Drehzahl. Das zweite weitere Zertifikat wird zumindest anhand eines zweiten weiteren Nutzungsparameters erstellt. Der zweite weitere Nutzungsparameter ist ein Testzeitpunkt, wie beispielsweise ein Datum und/oder eine Uhrzeit, an/zu welchem/welcher ein Test durchgeführt und insbesondere zu welchem/welcher der zweite weitere Nutzungsparameter erfasst wird.

Alternativ oder zusätzlich kann in dem Verfahren zumindest ein drittes weiteres Zertifikat erstellt werden. Im vorliegenden Fall ist das dritte weitere Zertifikat als ein Instandhaltungszertifikat ausgebildet. Das dritte weitere Zertifikat wird zumindest anhand eines ersten weiteren Gegenstandsparameters, insbesondere Instandhaltungsparameters, erstellt. Der erste weitere Gegenstandsparameter ist ein Instandhaltungszeitpunkt. Ferner wird das dritte weitere Zertifikat anhand eines zweiten weiteren Gegenstandsparameters, insbesondere Instandhaltungsparameters, erstellt, und zwar insbesondere anhand einer Angabe einer instand zuhaltenden Komponente des Gegenstands. Denkbar ist, dass das dritte weitere Zertifikat und das zweite weitere Zertifikat zusammenfassbar sind zu einem Hauptzertifikat, wie beispielsweise einem Betriebszertifikat.

Alternativ oder zusätzlich kann in dem Verfahren zumindest ein viertes weiteres Zertifikat erstellt werden. Im vorliegenden Fall ist das vierte weitere Zertifikat als ein Vertriebszertifikat ausgebildet. Das vierte weitere Zertifikat wird zumindest anhand eines dritten weiteren Gegenstandsparameters erstellt. Der dritte weitere Gegenstandsparameter ist ein Vertriebsparameter, wie insbesondere eine Käuferinformation. Ferner wird das vierte weitere Zertifikat anhand eines vierten weiteren Gegenstandsparameters, insbesondere Instandhaltungsparameters, erstellt, und zwar insbesondere anhand eines Kaufzeitpunkts des Gegenstands 10.

Es ist denkbar, dass mehrere, insbesondere aller Zertifikate zu einem Hauptzertifikat, wie beispielsweise einem insbesondere zeitlichen Verlaufs- und/oder Lebenszeitzertifikat, zusammenzufassen. Das Hauptzertifikat kann alle in einem zeitlichen Verlauf des Gegenstands erstellten Zertifikate, vorzugsweise im Laufe einer Lebenszeit des Gegenstands, umfassen.

## Patentansprüche

1. Verfahren zu einer Generierung zumindest einer Kennung wenigstens eines Gegenstands (10), insbesondere einer Werkzeugmaschine, wobei in zumindest einem Verfahrensschritt mittels zumindest einer Erfassungseinheit (12) zumindest ein Nutzungsparameter und/oder zumindest ein Gegenstandsparameter des Gegenstands (10) erfasst wird, **dadurch gekennzeichnet, dass** in zumindest einem Verfahrensschritt mittels zumindest einer Recheneinheit (14) in Abhängigkeit von dem zumindest einen erfassten Nutzungsparameter und/oder dem zumindest einen erfassten Gegenstandsparameter ein Zertifikat des Gegenstands (10) erstellt wird und/oder der Gegenstand zumindest einer Person (16) zugeordnet wird.

2. Verfahren nach Anspruch 1, **dadurch gekennzeichnet, dass** in zumindest einem Verfahrensschritt wenigstens mittels der Recheneinheit (14) zumindest anhand des zumindest einen Nutzungsparameters wenigstens ein Erstbetriebszeitpunkt des Gegenstands (10) ermittelt wird und abhängig von diesem das Zertifikat erstellt wird.

3. Verfahren nach Anspruch 2, **dadurch gekennzeichnet, dass** in zumindest einem Verfahrensschritt wenigstens mittels der Recheneinheit (14) anhand zumindest eines in einer Speichereinheit (18), insbesondere in einer internen Speichereinheit des Gegenstands (10), hinterlegten Vertriebsparameters der ermittelte Erstbetriebszeitpunkt verifiziert wird.

4. Verfahren nach Anspruch 2 oder 3, **dadurch gekennzeichnet, dass** in zumindest einem Verfahrensschritt wenigstens mittels der Recheneinheit (14) anhand des zumindest einen Vertriebsparameters und des ermittelten Erstbetriebszeitpunkts ein Alter des Gegenstands (10) berechnet wird und abhängig von diesem das Zertifikat erstellt wird.

5. Verfahren nach einem der vorhergehenden Ansprüche, **dadurch gekennzeichnet, dass** in zumindest einem Verfahrensschritt wenigstens mittels der Recheneinheit (14) zumindest anhand des zumindest einen Nutzungsparameters und/oder des zumindest einen Gegenstandsparameters zumindest eine Anwendung des Gegenstands (10) ermittelt wird und abhängig von diesem das Zertifikat erstellt wird.

6. Verfahren nach einem der vorhergehenden Ansprüche, **dadurch gekennzeichnet, dass** in zumindest einem Verfahrensschritt wenigstens mittels der Erfassungseinheit (12) innerhalb zumindest eines Zeitintervalls Nutzungsparameter und/oder Gegenstandsparameter erfasst werden, die von der Recheneinheit (14) zu einer Anpassung des erstellten Zertifikats verarbeitet werden.

7. Verfahren nach einem der vorhergehenden Ansprüche, **dadurch gekennzeichnet, dass** in zumindest einem Verfahrensschritt zur Erstellung des Zertifikats und/oder zur Zuordnung zumindest mittels der Erfassungseinheit (12) zumindest ein zumindest als ein Nutzungszeitpunkt, eine Nutzungsdauer, eine Nutzungsanzahl, ein Nutzungsstandort, eine Nutzungsintensität und/oder ein Nutzungszustand des Gegenstands (10) ausgebildeter Nutzungsparameter erfasst wird.

8. Verfahren nach einem der vorhergehenden Ansprüche, **dadurch gekennzeichnet, dass** in zumindest einem Verfahrensschritt mittels der Recheneinheit (14) der Gegenstand (10) in Abhängigkeit von zumindest einem Identifikationsparameter der Person (16) der Person (16) zugeordnet wird, wobei bei einer wiederholten Zuordnung mittels des gleichen Identifikationsparameters wenigstens mittels der Recheneinheit (14) eine Zuteilung von Nutzungsrechten für die Person (16) zumindest initiiert wird.

9. Verfahren nach einem der vorhergehenden Ansprüche, **dadurch gekennzeichnet, dass** in zumindest einem Verfahrensschritt der zumindest eine Nutzungsparameter und/oder der zumindest eine Gegenstandsparameter mittels einer, insbesondere kabellosen, Kommunikationseinheit (20) zu einer Erstellung des zumindest einen Zertifikats und/oder zu einer Zuordnung des Gegenstands (10) zu einer Person (16) an zumindest eine externe Einheit (22), insbesondere eine die Recheneinheit (14) umfassende externe Einheit (22), übertragen wird.

10. Verfahren nach einem der vorhergehenden Ansprüche, **dadurch gekennzeichnet, dass** in zumindest einem Verfahrensschritt das zumindest eine erstellte Zertifikat und/oder die Zuordnung des Gegenstands (10) zu der Person (16) mittels einer, insbesondere kabellosen, Kommunikationseinheit (20) an zumindest eine externe Einheit (22) übertragen wird.

11. System zur Generierung zumindest einer Kennung, insbesondere mittels des Verfahrens nach einem der vorhergehenden Ansprüche, mit zumindest einem Gegenstand (10), insbesondere einer Werkzeugmaschine, mit zumindest einer Erfassungseinheit (12), welche dazu vorgesehen ist, zumindest einen Nutzungsparameter und/oder zumindest einen Gegenstandsparameter des Gegenstands (10) zu erfassen, und mit zumindest einer Recheneinheit (14), welche dazu vorgesehen ist, in Abhängigkeit von dem zumindest einen erfassten Nutzungsparameter und/oder dem zumindest einen erfassten Gegenstandsparameter ein Zertifikat des Gegenstands (10) zu erstellen und/oder den Gegenstand (10) zumindest einer Person (16) zuzuordnen.

12. System nach Anspruch 11, **dadurch gekennzeichnet, dass** der Gegenstand (10) zumindest die Erfassungseinheit (12) umfasst.

13. System nach Anspruch 11 oder 12, **gekennzeichnet durch** eine, insbesondere kabellose, Kommunikationseinheit (20), welche zu einer Übertragung der Kennung an eine externe Einheit (22) vorgesehen ist.
